# EUROPÄISCHE PATENTANMELDUNG

(11) **EP 4 490 994 A1**
(43) Veröffentlichungstag der Anmeldung: **15.01.2025**
(21) Anmeldenummer: 24188152.3
(22) Anmeldetag: 11.07.2024
(51) Int. Cl.: A01B 63/00, A01B 71/02, A01D 34/00

(54) **VERFAHREN ZUR FERNSTEUERUNG VON FUNKTIONEN EINER LANDMASCHINE ODER DAMIT GEKOPPELTER ANBAUGERÄTE**

(30) Priorität: 11.07.2023 DE 102023118350
(71) Anmelder: Reichhardt GmbH Steuerungstechnik, 35410 Hungen (DE)
(72) Erfinder: Soussi, Rachid, 35398 Gießen (DE)
(74) Vertreter: Haarpatent Patentanwälte Krämer Meyer

(57) **Zusammenfassung**

Bei einem Verfahren zur Ansteuerung wenigstens einer AUX-Funktion einer Landmaschine (1) mit einer ein CAN-Wifi-Modul (7) umfassenden ersten Vorrichtung (4a), sind folgende Schritte vorgesehen:
Aufbau einer datenaustauschenden Verbindung zwischen der ersten Vorrichtung (4a) und der Landmaschine (1), wobei sich das CAN-Wifi-Modul (7) als ISOBUS-Client mit VT-Maske und AUX-Inputs sowie -Outputs auf dem ISOBUS der Landmaschine nach ISO11783 anmeldet,
eine WLAN-Verbindung zu einem mobilen Endgerät (5) mit einer Bedienoberfläche zur Anzeige von maschinenspezifischen Informationen und
Eingabe von maschinenspezifischen Befehlen hergestellt wird oder eine WLAN-Verbindung zu einer zweiten Vorrichtung (4b) auf einer weiteren Landmaschine (1) mit einer Bedienoberfläche zur Anzeige von maschinenspezifischen Informationen und Eingabe von maschinenspezifischen Befehlen hergestellt wird,
Eingaben auf der Bedienoberfläche an das CAN-Wifi-Modul (7) über die WLAN-Verbindung übermittelt werden,
das CAN-Wifi-Modul (7) einen maschinenspezifischen Befehl nach ISO11783 auf dem ISOBUS erzeugt und AUX-Funktionen an der Landmaschine (1) auslöst.

## Beschreibung

Die Erfindung betrifft ein Verfahren zur Ansteuerung wenigstens einer AUX-Funktion einer Landmaschine mit einem mobilen Endgerät und ein System zur Durchführung des Verfahrens.

Landmaschinen, insbesondere motorgetriebene Fahrzeuge für die Land- und Forstwirtschaft und dazugehörige Anbaugeräte, verfügen häufig über eine programmierbare, elektronische Steuerungseinheit zur Steuerung und Regelung von verschiedenen Antriebs- und Gerätekomponenten. Die Steuerungseinheit ist über ein maschineneigenes Netzwerk oder Steuerbussystem mit Aktoren und gegebenenfalls angebauten Geräten verbunden und weist eine Benutzerschnittstelle auf, an der Steuerbefehle und Regelparameter eingegeben oder ausgewählt werden können. Die Benutzerschnittstelle erlaubt die Eingabe von Sollwerten für bestimmte Parameter und besitzt eine grafische Anzeigetafel, auf der eingegebene Sollwerte und von Sensoren gemessene Arbeitsparameter und Funktionssignale der Maschine angezeigt werden können. Vielfach ist die Anzeigetafel auch mit einer Berührungseingabefunktion versehen, um die Eingabe verschiedener Parameter zu erleichtern. In landwirtschaftlichen Fahrzeugen und mobilen landwirtschaftlichen Maschinen werden häufig Steuerbussysteme und Benutzerschnittstellen nach dem Standard ISO 11783 eingesetzt, der weitläufig als ISOBUS bekannt ist.

DE 10 2014 211 712 A1 offenbart eine Anordnung zur Kontrolle einer Geräteschnittstelle eines landwirtschaftlichen Arbeitsfahrzeugs, umfassend eine Steuereinheit des Arbeitsfahrzeugs, die mit einem fremdkraftbetätigten Aktor zur Verstellung der Position der Geräteschnittstelle in kontrollierender Verbindung steht, und einem tragbaren Computer mit Eingabemitteln und einem Prozessor, der mit der Steuereinheit in drahtloser Kommunikationsverbindung steht und auf dem eine Software heruntergeladen ist, welche eine Kontrolle des Aktors mittels der Eingabemittel über den Prozessor und die Steuereinheit ermöglicht.

Die Benutzerschnittstelle kann als ein "Universal Terminal" (UT) eine Mensch-Maschine-Schnittstelle zu dem ISOBUS darstellen. Das UT weist in der Regel einen Anzeigebildschirm und Bedienungselemente auf. Jedes Gerät, das an den ISOBUS angeschlossen wird, meldet sich beim UT an und lädt einen Objektpool auf das UT. Über den Objektpool können Informationen über das jeweilige Gerät eingesehen und Einstellungen vorgenommen werden. Nachteilig ist jedoch, dass der UT oftmals eine geringe Auflösung besitzt und insbesondere bei älteren Landmaschinen nicht mehr dem heutigen technischen Standard entspricht. Der UT ist auf einer Seite der Fahrerkabine montiert, wobei seine Position nicht veränderbar ist. Das hat den wesentlichen Nachteil, dass der Fahrer der Landmaschine in Abhängigkeit von seiner Sitzposition den UT nicht oder nicht optimal einsehen und bedienen kann. Der Fahrer kann auf weitere Bedienelemente, wie z. B. einen Joystick, zurückgreifen, die in der Regel auch für den Fahrer in verschiedenen Positionen zugänglich positionierbar sind. Diese Bedienelemente umfassen jedoch keine optischen Anzeigemittel und sind lediglich zur Bedienung der Landmaschine oder der Anbaugeräte vorgesehen. Derartige Bedieneinheiten sind durch ihre Verkabelung maschinengebunden. Der Anwender muss auf der Maschine sein, um Funktionen über z. B. einen Joystick ansteuern zu können.

Auf der landwirtschaftlichen Maschine wird die Zuweisung von AUX-Inputs (Tasten) zu AUX-Outputs (Funktionen) über ein ISO UT verwaltet. Nach dem ISO11783-Standard können AUX-Inputs und Outputs als ,Single' oder ,Multi assignable' gekennzeichnet sein. Bei einigen Arbeitsgängen muss der Landwirt von der Maschine absteigen, um zum Beispiel das Anbaugerät zu kontrollieren (z. B. Prüfung der Düsenfunktion einer Spritze). Im Anschluss steigt er wieder auf und nimmt ggf. Anpassungen über eine Joystick-Funktion vor. Daraufhin kann es vorkommen, dass er erneut absteigen muss, um das Ergebnis zu kontrollieren. Bei anderen Arbeitsgängen kommt eine weitere Arbeitsmaschine hinzu, welche durch mindestens eine weitere Person gesteuert wird. Zwischen den Arbeitsmaschinen kommt es dann zur Interaktion, welche zusätzlich zur eigentlichen Arbeitstätigkeit ausgeführt werden müssen (z. B. Überladevorgang während einer Erntetätigkeit).

Problematisch bei den bekannten Vorrichtungen bzw. Verfahren ist, dass die Arbeitsgänge mitunter sehr lange dauern, da der Landwirt/Arbeiter häufig ab und wieder aufsteigen muss, um Funktionen aus der Kabine der Arbeitsmaschine heraus anzusteuern. Hiermit verbunden ist eine hohe Belastung des Fahrers der Erntemaschine, da er sich auf mehrere Arbeitsprozesse gleichzeitig (z. B. Erntemaschine steuern und gleichzeitig den Überladeprozess managen) fokussieren muss. Single assignable' (von AUX-Funktionen) bedeutet, dass nur eine Zuweisung des jeweiligen Inputs/Funktion möglich ist. Somit können Funktionen nur von einer spezifischen Bedieneinheit angesteuert werden. Eine Rekonfigurierung ist meist umständlich. Außerdem können nur AUX-Funktionen einer Arbeitsmaschine angesteuert werden, wenn entsprechende Outputs zur Verfügung stehen (ein Anbaugerät angeschlossen ist).

Der Erfindung liegt die Aufgabe zugrunde, ein Verfahren bereitzustellen, mit dem eine Fernsteuerung einer Landmaschine zumindest für einzelne Befehle möglich ist.

Gelöst wird die Aufgabe durch die Merkmale des Anspruchs 1. Bevorzugte Ausgestaltungen sind in den abhängigen Ansprüchen beschrieben.

Die Aufgabe wird erfindungsgemäß dadurch gelöst, dass ein Verfahren zur Ansteuerung wenigstens einer AUX-Funktion einer Landmaschine mit einer ein CAN-Wifi-Modul umfassenden ersten Vorrichtung bereitgestellt wird, umfassend die Schritte:
Aufbau einer datenaustauschenden Verbindung zwischen der ersten Vorrichtung und der Landmaschine, wobei sich das CAN-Wifi-Modul als ISOBUS-Client mit VT-Maske und AUX-Inputs sowie -Outputs auf dem ISOBUS der Landmaschine nach ISO11783 anmeldet,
eine WLAN-Verbindung zu einem mobilen Endgerät mit einer Bedienoberfläche zur Anzeige von maschinenspezifischen Informationen und Eingabe von maschinenspezifischen Befehlen hergestellt wird oder eine WLAN-Verbindung zu einer zweiten Vorrichtung auf einer weiteren Landmaschine mit einer Bedienoberfläche zur Anzeige von maschinenspezifischen Informationen und Eingabe von
maschinenspezifischen Befehlen hergestellt wird,
Eingaben auf der Bedienoberfläche an das CAN-Wifi-Modul über die WLAN-Verbindung übermittelt werden,
das CAN-Wifi-Modul einen maschinenspezifischen Befehl nach ISO11783 auf dem ISOBUS erzeugt und AUX-Funktionen an der Landmaschine auslöst. Das erfindungsgemäße Verfahren ermöglicht die Fernsteuerung (Remote Control) von Funktionen einer Landmaschine alleine und etwaiger hiermit gekoppelter Anbaugeräte auf Basis des ISOBUS nach ISO 11783. Eine Landmaschine umfasst im Sinne der Erfindung eine landwirtschaftliche Arbeitsmaschine alleine oder zusammen mit einem Anbaugerät oder mehreren Anbaugeräten.

Die Vorrichtung etabliert eine drahtlose oder drahtgebundene Verbindung zur Landmaschine. Ferner wird eine drahtlose Verbindung zwischen der Vorrichtung, insbesondere deren CAN-WiFi-Modul, welches sich als ISOBUS-Client mit VT- und AUX-N-Funktionalität beim ISOBUS der Landmaschine anmeldet, und einem mobilen Endgerät hergestellt. Das mobile Endgerät ist vorzugsweise als ein in einer Hand führbares Endgerät mit einem berührungssensitiven Bildschirm ausgestaltet. Bei dem Endgerät kann es sich beispielsweise um einen Laptop, einen Tablet-Rechner, ein Smartphone oder ein sonstiges mobiles elektronisches Gerät handeln, das vorteilhafterweise einen berührungssensitiven Bildschirm aufweist und das für die Verbindung mit dem CAN-WiFi-Modul notwendige Hardwareschnittstellen aufweist. Eine bevorzugte Verbindung ist eine W-LAN-Verbindung, jedoch sind auch kabelfreie Verbindungen möglich.

Insbesondere betrifft die Erfindung ein Verfahren zur Ansteuerung wenigstens einer AUX-Funktion einer Landmaschine mit einem mobilen Endgerät bereitgestellt wird, umfassend die Schritte:
Aufbau einer datenaustauschenden Verbindung zwischen dem mobilen Endgerät und einem CAN-Wifi-Modul der Landmaschine, wobei sich das CAN-Wifi-Modul als ISOBUS-Client mit VT-Maske und AUX-Inputs sowie -Outputs auf dem ISOBUS der Landmaschine nach ISO11783 anmeldet, eine Bedienoberfläche zur Anzeige von maschinenspezifischen Informationen und Eingabe von maschinenspezifischen Befehlen auf dem mobilen Endgerät vorliegt und Eingaben auf der Bedienoberfläche an das CAN-Wifi-Modul über die Verbindung übermittelt werden, das CAN-Wifi-Modul einen maschinenspezifischen Befehl nach ISO11783 auf dem ISOBUS erzeugt und AUX-Funktionen an der Landmaschine auslöst

Das mobile Endgerät ist über kabelfreie Kommunikationsmittel datenaustauschend mit dem CAN-WiFi-Modul verbunden, so dass ein Datenaustausch über die Kommunikationsverbindung erfolgen kann und die Anzeige von maschinenspezifischen Informationen und die Eingabe von maschinenspezifischen Befehlen über das mobile Endgerät möglich sind.

Die Bedienoberfläche auf dem Endgerät kann durch ein auf dem Endgerät installiertes Programm, insbesondere eine App bereitgestellt werden. Die Bedienoberfläche kann aber auch von einer Weboberfläche bereitgestellt werden. Die Bedienoberfläche kann eine Funktionszuweisung widerspiegeln. Hierdurch kann ein Tastendruck auf dem Endgerät via z. B. WLAN an das CAN-WiFi-Modul übertragen werden. Dieses kann dann nach ISO11783 eine Nachricht auf dem ISOBUS erzeugen und eine Ansteuerung von vorteilhafterweise zugewiesenen AUX-Funktionen an der Landmaschine oder z. B. einem Anbaugerät auslösen.

Alternativ ist eine zweite Vorrichtung mit einer weiteren Landmaschine datenaustauschend verbunden und die erste und zweite Vorrichtung kommunizieren über eine WLAN-Verbindung miteinander. In der weiteren Landmaschine liegt eine Bedienoberfläche zur Anzeige von maschinenspezifischen Informationen und Eingabe von maschinenspezifischen Befehlen vor. Die beiden Vorrichtungen kommunizieren miteinander, wobei über die Vorrichtungen AUX-Funktionen in jeweils der anderen Landmaschine auslösbar sind.

Eingaben auf der Bedienoberfläche können auch mithilfe von Bedienelementen durchgeführt werden. Als Bedienelement kann beispielsweise ein Joystick fungieren.

Durch das erfindungsgemäße Verfahren kann die Dauer von Arbeitsprozessen verkürzt werden und ein Bediener der Landmaschine muss nicht mehr in die Kabine der Maschine, um eine AUX-Funktion ansteuern zu können. Der Bediener wird entlastet, indem er sich nicht mehr auf mehrere Prozesse konzentrieren muss.

Vorteilhafterweise wird die Auslösung von AUX-Funktionen auf der Landmaschine freigegeben. Beispielsweise kann der Fahrer der Landmaschine in der Fahrerkabine verbleiben und eine weitere Person die AUX-Funktionen von außerhalb der Landmaschine ansteuern. Durch einen derartigen Authentifizierungsprozess wird sichergestellt, dass keine ungewollte Ansteuerung von Maschinenfunktionen stattfinden kann. Je nach Ausgestaltung, kann die Freigabe einmalig pro bestehender Verbindung erteilt werden. Es kann jedoch auch bevorzugt sein, dass jede AUX-Funktion freigegeben werden muss.

Es ist vorteilhafterweise vorgesehen, dass Single Assignment-Funktionen von einem Bedienelement der Landmaschine entsprechenden AUX-Inputs sowie - Outputs des CAN-Wifi-Modul zugewiesen werden, so dass eine Eingabe an dem Bedienelement einen Input am CAN-Wifi-Modul auslöst und zu einem maschinenspezifischen Befehl führt. Single Assignment-Funktionen können von z. B. einem Joystick dem CAN-Wifi-Modul zugewiesen werden. Ein Input an z. B. dem Joystick löst dann einen Input des CAN-Wifi-Moduls aus, was zu einer Ansteuerung der Landmaschine führt. Somit können Funktion über ein Bedienelement, aber auch über die Bedienoberfläche des mobilen Endgerätes angesteuert werden.

Vorteilhafterweise befindet sich der ISO-Client mit VT- und AUX-Funktion auf der Landmaschine, sprich ist mit ihr verbunden, so dass die Verbindung auf dem ISOBUS nicht einfach unterbrochen werden kann (Fail Safe).

Funktionen können bevorzugt AUX-Inputs und AUX-Outputs einmalig zugeordnet werden.

Es ist bevorzugt, dass das CAN-Wifi-Modul die Anmeldung eines Anbaugerätes mit entsprechenden Outputs am ISOBUS simuliert, so dass physische Inputs simulierten Outputs zugeordnet werden. Eine auf der Landmaschine vorhandene Hardware, insbesondere das CAN-Wifi-Modul kann die Anmeldung eines Anbaugerätes mit Outputs simulieren. Dies ermöglicht eine Zuweisung physischer Inputs zu simulierten Outputs des simulierten Anbaugerätes. Die Ansteuerung der Outputs ermöglicht das Ansteuern von Funktionen auf der Landmaschine (z. B. Einschalten der Zapfwelle), ohne dass ein physisches Anbaugerät angekoppelt sein muss.

Ferner ist bevorzugt, dass die Vorrichtung eine über die Bedienoberfläche erfolgte Eingabe von maschinenspezifischen Befehlen aufnimmt und wiederholt vornimmt. Die Bedienoberfläche kann beispielsweise auf einem mobilen Endgerät vorhanden sein, bzw. das entsprechende Programm oder Weboberfläche kann eine Sequenz Control-Funktion oder Makro-Funktion haben. Über die Bedienoberfläche kann somit eine Reihenfolge von Tastendrücken aufgenommen werden. Diese Reihenfolge kann nachfolgend als Sequenz abgespielt werden. Der Anwender muss nicht jeden Tastendruck selbst durchführen.

Des Weiteren betrifft die Erfindung ein System zur Durchführung des Verfahrens, mit wenigstens einer Landmaschine, einer ersten Vorrichtung und einer zweiten Vorrichtung oder einem mobilen Endgerät mit einer Bedienoberfläche zur Anzeige von maschinenspezifischen Informationen und Eingabe von maschinenspezifischen Befehlen, die über Hardwareschnittstellen zur datenaustauschenden Kommunikation verfügen und die Vorrichtungen, die ein CAN-Wifi-Modul umfassen, mit wenigstens der einen Landmaschine verbunden oder verbindbar ist. Insbesondere betrifft die Erfindung ein System zur Durchführung des Verfahrens mit einer Landmaschine und einem mobilen Endgerät, die über Hardwareschnittstellen zur datenaustauschenden Kommunikation verfügen und einer Vorrichtung, die ein CAN-Wifi-Modul umfasst und mit der Landmaschine verbunden oder verbindbar ist. Insbesondere umfasst das mobile Endgerät ebenfalls ein CAN-Wifi-Modul.

Die erste und zweite Vorrichtung kann beispielsweise als Dongle ausgestaltet sein, der mit einem entsprechenden Datenanschluss der Landmaschine verbindbar ist. Im Folgenden wird der Einfachheit halber auf den Plural verzichtet, jedoch sind die beschriebenen Ausgestaltungen auf beide Vorrichtungen anwendbar.

Die Vorrichtung umfasst vorteilhafterweise einen ISOBUS-Client mit VT-Maske und AUX-Inputs sowie -Outputs. Diese können beispielsweise auf dem CAN-Wifi-Modul der Vorrichtung vorliegen. Die Vorrichtung umfasst insbesondere eine programmierbare Recheneinheit. Die Vorrichtung umfasst Hardwareschnittstellen zur kabellosen und/oder kabelfreien Kommunikation. Insbesondere umfasst die Vorrichtung über mindestens eine WLAN-Schnittstelle zur datenaustauschenden Kommunikation mit einem mobilen Endgerät.

Die Erfindung wird nachfolgend anhand von Ausführungsbeispielen der Erfindung näher erläutert, die in der Zeichnung dargestellt sind. Es zeigen
- Figur 1: eine schematische Kommunikation zwischen einem Endgerät und einer Landmaschine,
- Figur 2: eine schematische Kommunikation zwischen einem Gespann,
- Figur 3: ein schematischer Datenfluss nach einer Ausgestaltung des Verfahrens,
- Figur 4: ein schematischer Datenfluss nach dem Stand der Technik und
- Figur 5: eine schematische Darstellung eines Multi-Assignments.

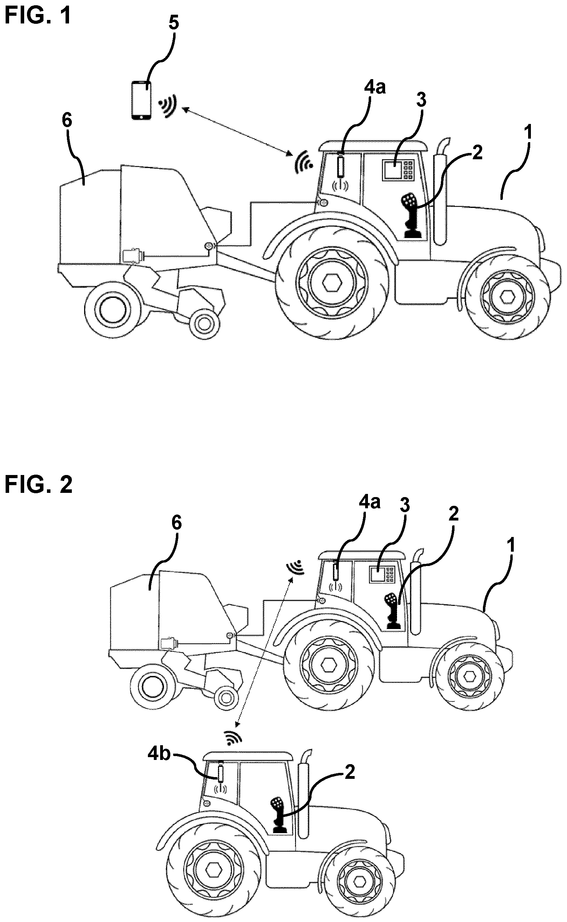

Figur 1 zeigt eine schematische Kommunikation zwischen einem Endgerät und einer Landmaschine. Die im Sinne der Erfindung als Main Unit bezeichnete Landmaschine 1 stellt die zu kontrollierende Maschine bzw. das Gespann (Zugfahrzeug mit ISOBUS-Anbaugerät) dar. Als Landmaschine 1 wird im Sinne der Erfindung auch eine Landmaschine mit Anbaugerät bezeichnet. Ein Gespann wird hierzu alternativ verwendet.

Auf der Landmaschine 1 kann ein Bedienelement 2, als eine "Input Unit" (z. B. ein Joystick) vorhanden sein, welcher ebenfalls genutzt wird, um Maschinenfunktionen über ISOBUS anzusteuern. Ebenfalls vorhanden ist ein ISO UT 3, welches nach ISO 11783 die Zuweisung von AUX-Inputs und - Outputs verwaltet, die beispielsweise vom Bedienelement 2 kommen können. Eine erste Vorrichtung 4a, die über ein CAN-Wifi-Modul verfügt, ist hier als Dongle ausgestaltet und wird auf der Main Unit montiert bzw. an der In-Cab Dose angeschlossen. Der Dongle 4a verfügt über einen ISO-Client mit VT-Maske und AUX-Inputs sowie -Outputs, welcher sich auf dem ISOBUS nach ISO11783 anmeldet. Die als Dongle gestaltete Vorrichtung 4a kommuniziert via WLAN mit einem mobilen Endgerät 5, das über entsprechende Hardwareschnittstellen zur Herstellung der Verbindung verfügt. Die Landmaschine 1 und somit auch die Vorrichtung 4a kann über CAN (ISOBUS) mit einem Anbaugerät 6, bzw. einer Arbeitsmaschine verbunden sein. Das Anbaugerät 6 verfügt über ISOBUS nach ISO 11783 Standard.

Als Erweiterung könnte via WLAN mit einer zweiten Vorrichtung kommuniziert werden, welches die Inputs von Bedienelementen auf einer anderen Maschine weitergibt.

Zwischen dem mobilen Endgerät 5 und der Vorrichtung 4a existiert ein Freigabeprozess. Die Freigabe kann beispielsweise über eine auf dem Endgerät installierte App angefordert und über eine Bedienoberfläche (VT-Maske nach ISO 11783) auf der Landmaschine 1 bestätigt oder abgelehnt werden. Die App stellt auch eine Bedienoberfläche auf dem mobilen Endgerät 5 bereit. Alternativ kann die Bedienoberfläche durch eine Weboberfläche generiert werden. Auf der Landmaschine 1 oder daran angeschlossen ist eine ECU, welche über AUX-Outputs verfügt.

Figur 2 zeigt eine schematische Kommunikation zwischen einem Gespann. Die Landmaschine 1 stellt die zu kontrollierende Maschine bzw. Gespann (Zugfahrzeug mit ISOBUS-Anbaugerät) dar. Die Landmaschine 1 kann auch als Main Unit bezeichnet werden. Auf der Main Unit kann ein Bedienelement 2 als "Input Unit" (z. B. ein Joystick) vorhanden sein, welches ebenfalls genutzt wird, um Maschinenfunktionen über ISOBUS anzusteuern. Ebenfalls vorhanden ist ein ISO UT 3, welches nach ISO 11783 die Zuweisung von AUX-Inputs und -Outputs verwaltet. Die erste Vorrichtung 4a wird auf der Main Unit montiert und angeschlossen. Es verfügt über einen ISO-Client mit VT-Maske und AUX-Inputs sowie -Outputs, welcher sich auf dem ISOBUS nach ISO11783 anmeldet. Die erste Vorrichtung 4a kann über WLAN mit einem mobilen Endgerät kommunizieren und über CAN mit der Arbeitsmaschine 6. Diese erste Vorrichtung 4a in der Main Unit kann als "Master"-Modul fungieren. Ferner kann eine zweite Vorrichtung 4b in einer weiteren Landmaschine 1 vorliegen, wobei die Vorrichtungen 4a, 4b über WLAN kommunizieren und die Vorrichtung 4b der weiteren Landmaschine als "Slave"-Modul agiert. Die beiden Landmaschinen 1 können als Gespann bezeichnet werden. Zwischen den Vorrichtungen 4a, 4b des Gespanns existiert ein Freigabeprozess. Die Freigabe wird angefordert und über eine Bedienoberfläche (VT-Maske nach ISO 11783) auf der Main Unit bestätigt oder abgelehnt. Auf der Main Unit oder daran angeschlossen ist eine ECU, welche über AUX-Outputs verfügt. Auf der weiteren Landmaschine 1 existiert ebenfalls ein Bedienelement 2. Das Bedienelement 2 der weiteren Landmaschine 1 kann genutzt werden, um Maschinenfunktionen auf der Main Unit über eine Verbindung der Vorrichtungen 4a, 4b anzusteuern.

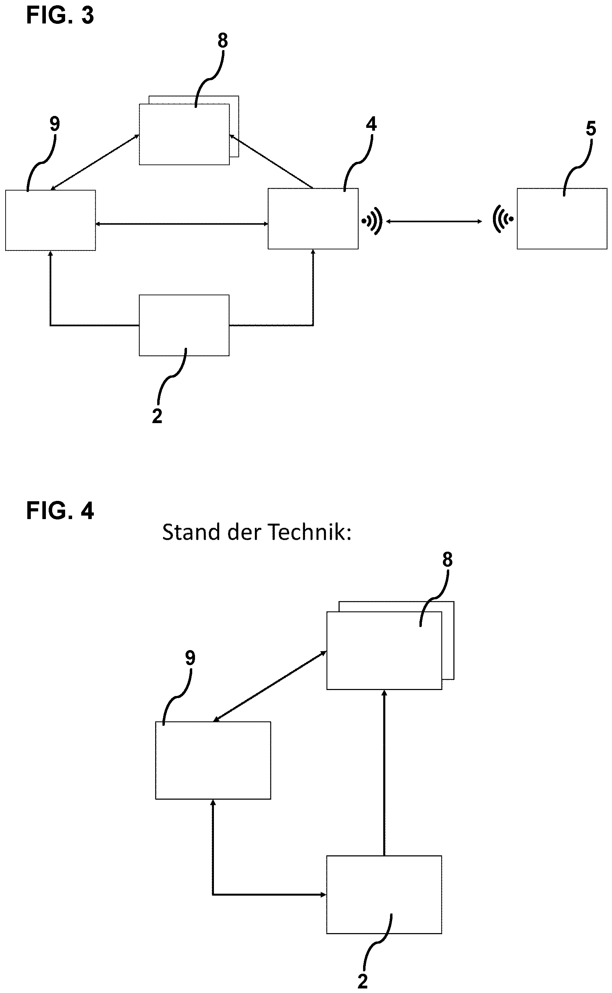

Figur 3 zeigt einen schematischen Datenfluss nach einer Ausgestaltung des Verfahrens. Das mobile Endgerät 5 kommuniziert über WLAN mit einem CAN-Wifi-Modul 4 einer Vorrichtung, das mit der Landmaschine verbunden ist und über einen ISO-Client mit VT-Maske und AUX-Inputs sowie -Outputs verfügt und sich auf dem ISOBUS der Landmaschine nach ISO11783 anmeldet. Das CAN-Wifi-Modul 4 kommuniziert via CAN (ISOBUS) mit einer oder mehreren ISOBUS-ECUs 8. Es werden Bedienungen von AUX-Funktionen über ISOBUS an die ISOBUS-ECUs 8 übermittelt, die über AUX-Funktionalität verfügen. Des Weiteren besteht eine ISOBUS-Verbindung zwischen ISO-UT 9 und ECUs 8. Die Anmeldung der ECUs 8 erfolgt als ISOBUS-Teilnehmer beim ISO-UT 9. Das ISO-UT 9 verwaltet die Zuweisung der AUX-Funktionen und Inputs und stellt die ISOBUS-Bedienoberfläche auf der Main Unit dar. Ferner kann eine ISOBUS-Verbindung zwischen ISO-UT 9 und herkömmlichem ISOBUS-Bedienelementen 2, z. B. einem Joystick bestehen. Der ISOBUS-Joystick 2 kann sich als Teilnehmer am ISOBUS bei dem ISO-UT 9 anmelden. Es besteht eine ISOBUS-Verbindung zwischen CAN-Wifi-Modul 4 und ISOBUS-UT 9, so dass sich das CAN-Wifi-Modul 4 als Client mit AUX-Funktionen und Inputs/Outputs am ISO-UT 9 anmelden kann. Über die ISOBUS-Verbindung zwischen Bedienelement 2, z. B. dem Joystick und dem CAN-Wifi-Modul 4 werden AUX-Inputs des Bedienelements 2 an das CAN-WiFi-Modul 4 übermittelt, was ebenfalls Bedienungen von AUX-Funktionen über ISOBUS an die ISOBUS-ECUs 8 übermittelt.

Figur 4 zeigt einen schematischen Datenfluss nach dem Stand der Technik. Es liegt ein ISO-UT 9 als ISOBUS-Bedieneinheit auf der Landmaschine vor. Zwischen dem ISO-UT 9 und einem Bedienelement 2, z. B. dem AUX-Joystick besteht eine ISOBUS-Verbindung. Das Bedienelement 2 meldet sich mit Anzahl seiner AUX-Inputs als Teilnehmer beim ISO-UT 9 an. Es besteht eine ISOBUS-Verbindung zwischen Bedienelement 2 und ISOBUS-ECUs 8. Input-Befehle des Bedienelements 2 werden an die ISOBUS-ECUs 8 gesendet. Die ISOBUS-ECU 8 verfügt über AUX-Funktionen. Ferner besteht eine ISOBUS-Verbindung zwischen ISOBUS-ECUs 8 und ISO-UT 9, wobei das ISO-UT 9 die Zuweisung von AUX-Inputs des Bedienelements 2 zu AUX-Funktionen der ISOBUS-ECUs 8 verwaltet.

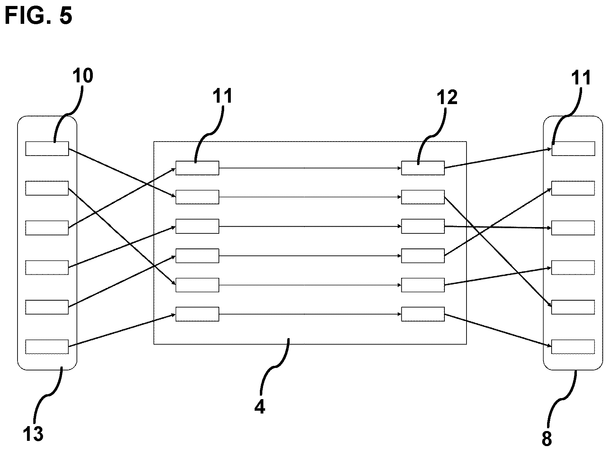

Figur 5 zeigt eine schematische Darstellung eines Multi-Assignments. Es liegen mehrere ISOBUS-Teilnehmer 13 mit AUX-Inputs 10 nach ISO 11783 als Bedienelemente vor. Die Vorrichtung 4 stellt die Verbindung zu ISOBUS-ECU 8 mit AUX-Funktionen 11 nach ISO 11783 her und weist diesen AUX-Inputs 12 der Vorrichtung 4 nach ISO 11783 zu. Hieraus folgen AUX-Inputs 12 nach ISO 11783 der Vorrichtung 4. Es erfolgt eine Funktionszuweisung über ISOBUS, nämlich eine Zuweisung von Bedienelemente-Inputs 10 zu AUX-Funktionen 11 der Vorrichtung 4 über ISOBUS und Zuweisungen von AUX-Inputs 12 der Vorrichtung 4 zu AUX-Funktionen 11 des ISOBUS-ECU 8 über ISOBUS. Zwischen AUX-Funktionen 11 und -Inputs 12 können proprietäre Zuweisungen bestehen.

## Patentansprüche

1. Verfahren zur Ansteuerung wenigstens einer AUX-Funktion einer Landmaschine (1) mit einer ein CAN-Wifi-Modul (7) umfassenden ersten Vorrichtung (4a), umfassend die Schritte:
Aufbau einer datenaustauschenden Verbindung zwischen der ersten Vorrichtung (4a) und der Landmaschine (1), wobei sich das CAN-Wifi-Modul (7) als ISOBUS-Client mit VT-Maske und AUX-Inputs sowie - Outputs auf dem ISOBUS der Landmaschine nach ISO11783 anmeldet,
eine WLAN-Verbindung zu einem mobilen Endgerät (5) mit einer Bedienoberfläche zur Anzeige von maschinenspezifischen Informationen und Eingabe von maschinenspezifischen Befehlen hergestellt wird oder eine WLAN-Verbindung zu einer zweiten Vorrichtung (4b) auf einer weiteren Landmaschine (1) mit einer Bedienoberfläche zur Anzeige von maschinenspezifischen Informationen und Eingabe von maschinenspezifischen Befehlen hergestellt wird,
Eingaben auf der Bedienoberfläche an das CAN-Wifi-Modul (7) über die WLAN-Verbindung übermittelt werden,
das CAN-Wifi-Modul (7) einen maschinenspezifischen Befehl nach ISO11783 auf dem ISOBUS erzeugt und AUX-Funktionen an der Landmaschine (1) auslöst.

2. Verfahren nach Anspruch 1, **dadurch gekennzeichnet, dass** die Auslösung von AUX-Funktionen auf der Landmaschine (1) freigegeben werden.

3. Verfahren nach Anspruch 2, **dadurch gekennzeichnet, dass** die Freigabe einmalig pro bestehender Verbindung erteilt wird

4. Verfahren nach einem der vorhergehenden Ansprüche, **dadurch gekennzeichnet, dass** Single Assignment-Funktionen von einem Bedienelement (2) der Landmaschine (1) entsprechenden AUX-Inputs sowie -Outputs des CAN-Wifi-Modul (7) zugewiesen werden, so dass eine Eingabe an dem Bedienelement (2) einen Input am CAN-Wifi-Modul (7) auslöst und zu einem maschinenspezifischen Befehl führt.

5. Verfahren nach einem der vorhergehenden Ansprüche, **dadurch gekennzeichnet, dass** das CAN-Wifi-Modul (7) die Anmeldung eines Anbaugerätes (6) mit entsprechenden Outputs am ISOBUS simuliert, so dass physische Inputs simulierten Outputs zugeordnet werden.

6. Verfahren nach einem der vorhergehenden Ansprüche, **dadurch gekennzeichnet, dass** die Vorrichtung (4a, 4b) eine über die Bedienoberfläche erfolgte Eingabe von maschinenspezifischen Befehlen aufnimmt und wiederholt vornimmt.

7. System zur Durchführung des Verfahrens nach einem der Ansprüche 1 bis 6, mit wenigstens einer Landmaschine (1), einer ersten Vorrichtung (4a) und einer zweiten Vorrichtung (4b) oder einem mobilen Endgerät (5) mit einer Bedienoberfläche zur Anzeige von maschinenspezifischen Informationen und Eingabe von maschinenspezifischen Befehlen, die über Hardwareschnittstellen zur datenaustauschenden Kommunikation verfügen und die Vorrichtungen (4a, 4b), die ein CAN-Wifi-Modul (5) umfassen, mit wenigstens der einen Landmaschine (1) verbunden oder verbindbar ist.

8. System nach Anspruch 7, **dadurch gekennzeichnet, dass** sich ein ISOBUS-Client mit VT-Maske und AUX-Inputs sowie -Outputs auf der Vorrichtung (4a, 4b) befinden.

9. System nach Anspruch 7 oder 8, **dadurch gekennzeichnet, dass** die Vorrichtung (4a, 4b) eine programmierbare Recheneinheit umfasst.

10. System nach einem der Ansprüche 7 bis 9, **dadurch gekennzeichnet, dass** die Vorrichtung (4a, 4b) über mindestens eine WLAN-Schnittstelle zur datenaustauschenden Kommunikation mit einem mobilen Endgerät (5) umfasst.

11. System nach einem der Ansprüche 7 bis 10, **dadurch gekennzeichnet, dass** das System ein mobiles Endgerät (5) umfasst,
